Europäisches Patentamt

European Patent Office

Office européen des brevets

(11) Publication number: **0 092 269**
A1

# (12) EUROPEAN PATENT APPLICATION

(21) Application number: 83200503.7

(22) Date of filing: 11.04.83

(51) Int. Cl.³: **C 08 G 63/62,** C 08 G 63/20, C 08 F 283/02

(30) Priority: 15.04.82 IT 2075082

(43) Date of publication of application: 26.10.83
Bulletin 83/43

(84) Designated Contracting States: **AT BE CH DE FR GB LI LU NL SE**

(71) Applicant: **ANIC S.p.A., Via Ruggero Settimo, 55, I-90139 Palermo (IT)**

(72) Inventor: **Priola, Aldo, Via Martiri di Cefalonia, 40, I-20097 San Donato Milanese Milano (IT)**
Inventor: **Romano, Ugo, Via XXV Aprile, 10, I-20059 Vimercate Milano (IT)**
Inventor: **Renzi, Fiorenzo, Via Dante, 1, I-20064 Gorgonzola Milano (IT)**

(74) Representative: **Roggero, Sergio et al, Ing. Barzanò & Zanardo Milano S.p.A. Via Borgonuovo 10, I-20121 Milano (IT)**

(54) Composition based on aliphatic polycarbonates with acrylic or metacrylic end groups and capable of being cross-linked in the presence of radicalic initiators.

(57) Composition based on aliphatic polycarbonate with acrylic or metacrylic end groups cross-linkable in the presence of radicalic initiators obtained by functionalizing with acrylic or metacrylic groups a mixture consisting of diols, polyols and their –OH–terminated oligomeric derivatives containing in their molecules carbonate groups.

"COMPOSITION BASED ON ALIPHATIC POLYCARBONATES WITH
ACRYLIC OR METACRYLIC END GROUPS AND CAPABLE OF BEING
CROSS-LINKED IN THE PRESENCE OF RADICALIC INITIATORS."

It is known that a keen commercial interest exists for fluid product which contain reactive functions such as the acrylic or metacrylic groups and having a low volatility together with a low viscosity, so as to make possible to apply such products with the several techniques as conventionally used in the fields of varnishes, adhesives, slabs, or composite fiber-reinforced materials. Other outstanding features of these products are the high cross-linking velocity in the presence of radicalic agents, as well as the properties of adhesion to substrates, the mechanical properties and the stability towards a number of physical and chemical agents. As a rule, these properties are obtained by using mixtures of functional oligomers with reactive solvents or diluents so as to obtain the necessary fluidity of the system. The use of solvents implies serious problems as to economy, consumption of power and problems as to toxicity and environmental pollution.

The use of reactive diluents involves problems of an economical nature due to the high costs of such products and often problems of toxicological nature are also to be coped with.

It is thus important to have production processes available which make it possible to obtain products having the aforesaid properties, in a direct and versatile manner, so as to be adapted to the requirements of specific uses.

Having these objectives in view, the applicants have envisaged a process for the production of products which are reactive in the presence of radicalic initiators, by synthesizing an intermediate which contains hydroxyl functions and consists of a mixture of a diol or a polyol and their -OH-terminated oligomeric derivatives which contain carbonate groups in their molecules, and by subsequently functionalizing such an intermediate with acrylic or metacrylic groups.

By so doing, it becomes possible directly to obtain, as a single-step run, products having a preselected viscosity range, by properly varying the ratio of the monomeric component and the polycarbonate oligomer which is present in the mixture. It becomes also possible, by varying the structure of the diols or the polyols used and their functionality, to vary in an appropriate direction the technological properties of the cross-links obtained upon polymerization of the end mixture and also the reactivity towards

0092269

radicalic initiators can also be varied.

By so doing, considerable advantages over the prior art are achieved, in that a single process furnishes the synthesis of a product having preselected properties as to viscosity and chemical reactivity and it becomes possible to produce in a single installation a wide range of products suitable for a number of practical uses.

These uses comprise:

- the direct use of such products, to be cross-linked by radicalic initiators, UV radiations or electronic rays in the varnishing of paper, wood, plastics materials, leather, fabrics and varnishing and insulating electric wires and cables;

- the use of such products as reactive diluents or fluidizing agents in mixture with acrylated or nonacrylated polyester resins, epoxyacrylic resins or urethan-acrylic resins, for the preparation of laminates, composite materials with glass and organic fibers;

- the use of such products for the production of materials having outstanding optical properties, such as lenses, transparent slabs, sundries;

- the use of such products as adhesives, for example as optical cement for cementing slabs of organic or inorganic glass.

Quite characteristic features for these products are the low viscosity together with the high reactivity in radicalic polymerization reactions. Moreover, they exhibit other interesting properties such as the low volatility, the absence of odor, the low irritating power towards the skin and the convenience of application with the conventional procedures.

The diols or polyols which can be employed have a number of carbon atoms comprised between 3 and 20 and can contain in their molecules, ethereal bridges or aromatic, or cycloaliphatic groups and a number of hydroxyl functions comprised between 2 and 4.

Nonrestrictive examples of these compounds are: 1,4-butanediol, neopentyleneglycol, diethyleneglycol, 1,6-hexanediol, triethyleneglycol, 1,3- and 1,4-dimethanol-cyclohexane, 1,3- and 1,4-dimethanolbenzene, $\alpha$, $\omega$-bis-hydroxyethyl-bisphenol A, dimethanoltricyclodecane, trimethylolpropane, pentaerithritol, 1,4-butanediol-2-bis-hydroxyethylhydroquinone.

The polycarbonate intermediate can be obtained with any of the conventional methods for preparing carbonic esters and comprises the following steps:

1)  The reaction of transesterification between the diol or the polyol and a dialkyl- or a diaryl carbonate.

2)  The reaction between the diol or the polyol and its alkyl- or arylcarbonic derivative.

3)  The reaction between the diol or the polyol or a bis-chloro formate derivative thereof.

4)      The reaction between the diol or the polyol and phosgene.

The processes under 1) and 2) above have over the procedures which employ phosgene or chloroformates an additional asset since by using appropriate mixtures of diol  or polyol and carbonic derivative in the polycondensation reaction, final mixtures can be obtained, of diols or polyols and oligocarbonates which can directly be used in the subsequent acrylic or metacrylic functionalization stage.  In addition, these processes make it possible to obtain products having a higher transparency, a slighter discoloration, together with the total absence of chlorinated products.  By so doing, the products which are obtained with the processes under 1) and 2) have better properties, especially for the use in the optical field.

The subsequent acrylic functionalization stage can be carried out by causing the mixture of diol or polyol with the polycarbonate oligomer in any of the following ways:

1 - reaction with the acrylic or metacrylic acid

2 - reaction with acrylic or metacrylic esters

3 - reaction with acid chlorides of acrylic or metacrylic acid.

In the first two of these cases one can use with advantage a soluble or an insoluble acidic catalyst which boosts the reaction, and the latter can further be accelerated and completed by continuously removing the reaction volatiles (water or alcohol), optionally by means of an azeotrope formed with a properly selected solvent.

The acidic catalysts which can be employed consist of p.toluene sulphonic acid, methanesulphonic acid, trifluoromethanesulphonic acid, anhydrous sulphuric acid, benzenesulphonic acid, polystyrenesulphonic resins.

The solvents which can be employed for the reactions 1 and 2 consist of aliphatic, cycloaliphatic, aromatic or halogenated hydrocarbons and mixtures thereof, such as for example: benzene, toluene, xylenes, chlorobenzene.

In the third case the reaction with acid chlorides of acrylic or metacrylic acid is carried out in the presence of an aliphatic, aromatic or halogenated hydrocarbon solvent or mixtures of them with a tertiary amine in stoichiometric amounts relative to the acid chloride at a temperature comprised between 0°C and +50°C.

Examples of amines which can be employed are: pyridine, triethylamine, tri-nor.butylamine.

The products obtained as outlined above can be polymerized with any kind of radicalic initiator and lead to the formation of insoluble cross-linked products the properties of which vary as a function of the structure and the concentration of the acrylic functional groups which are present in the reaction mixture. More particularly, cross-linking can be carried out by

- 7 -

0092269

irradiation with UV radiations of the mixture in the presence of appropriate photoinitiators to be present in a concentration variable from 1% to 6% by weight. Examples of photoinitiators which can be used are: benzyldimethylketal, the benzoin ethers, trichloroaceto-phenone, 2-hydroxy-2-methyl-1-phenyl-propanone-1, thioxanthone, benzophenone together with tertiary amines.

The products obtained according to the present invention are characterized by high polymerization kinetics.

As an alternative, cross-linking can be carried out thermally in the presence of typical radicalic initiators, such as benzoyl peroxide, azo-bis-isobutyronitrile, tert.butyl perbenzoate, dicyclohexyl-peroxy-dicarbonate, diisopropyl-peroxy-dicarbonate, or initiators of the redox type consisting of the peroxides which are present and amines. The concentration of such initiators may be varied between 1% and 50% by weight and the reaction temperatures are between +20°C and +80°C.

A few examples are reported which relate to the preparation of these products and to the relative properties in order that the invention may better be illustrated thereby without construing the invention as being restricted thereto.

EXAMPLE 1

A 3-necked 1000 ml flask having a distillation column at its top consisting of 10 foraminous plates (dia. 30 mm) with a liquid dividing header fitted with a thermometer, a stirrer and a system for thermostatically controlling the bath by circulation of oil, was charged with 583.6 g (grams) (5.5 mols) of diethylene glycol, 366.1 g (3.1 mols) of diethylcarbonate and 5 g of a 10% solution of sodium ethylate in ethanol.

The system was heated under atmospherical pressures and on the head of the column reflux was adjusted so as to remove the ethanol produced in the reaction.

As soon as the bottom temperature reached 140°C a vacuum was gradually applied until obtaining an absolute (residual) pressure of 100 mmHg (millimeters of mercury) so as to remove the volatiles without being compelled to raise the jacket temperature too much. The end portion of the reaction was carried out at 10 mmHg so as to remove the slightest traces of alcohol and diethylcarbonate. The synthesis was carried out within an overall time of 3 hours.

A distillate fraction was obtained, 299.3 g, consisting of ethanol (91.8%) and diethylcarbonate (8.2%). The bottom fraction (648.5 g) contained 16.7% of diethyleneglycol and the balance was oligocarbonate of diethyleneglycol, said bottom product containing 13.5% of free hydroxyl (OH).

The product thus obtained has been further supplemented with free diethyleneglycol and subjected to acrylation according to the following procedure.

A 1000 ml flask having at its top a Marcusson header and a water-cooled reflux condenser has been charged, while working under a dry nitrogen blanket, with 200 g of the previously specified mixture, 16 g of diethyleneglycol, 140 g (1.95 mol) of acrylic acid, 100 mg of phenthiazine and 400 mls of benzene.

The reaction mixture was heated a few minutes under reflux conditions, whereafter there where introduced 3 g of paratoluenesulphonic acid and heating was continued under reflux conditions for a time of 7 hours. The water, as a reaction product, was collected and separated in the Marcusson header and the quantity which had been formed, 33.5 mls, was very near to the amount of 34 mls which was predictable on the basis of the number of hydroxyl groups in the mixture.

The reaction trend, in connection with the free diethyleneglycol, has been checked gaschromatographically (SE-30 column, 10%, length 3 meters, temp. of column 170°C). The analysis has revealed the complete absence of free glycol whereas the ratio of diacrylate of diethylene glycol to the corresponding monoacrylate was 95 to 5 in terms of percentage area.

The reaction product has subsequently been treated with 15 g of solid $K_2CO_3$ with stirring at room temperature during 3 hours, the mixture being then filtered on a $G_2$ porous diaphragm.

Subsequently, the solvent has been evaporated off under an increasing degree of vacuum, down to 0.2 Torr, working in a rotary evaporator at room temperature. The product obtained at the end of this step weighed 272 g corresponding to a yield of 86% of theory. The product had a viscosity of 73 cps as determined in a Brookfield viscosimeter at 25°C and the acid number was 2.

The contents of the end -OH groups, at the end of the reaction, was equal to or not more than 0.1%.

A portion of the product has been supplemented with its 3% by weight of benzyldimethylketal and spread on sandblasted steel slabs by the aid of a K-control bar. The slabs have then been caused to pass through an UV-ray producing system consisting of a mercury vapor lamp of the medium-pressure type having a power of 80 W/cm and equipped with a conveyor belt driven at a speed of 24 m/min. After 10 passes in total, there was obtained a perfectly dry film having the following properties:

| | |
|---|---|
| Thickness | = 35 microns |
| König Hardness | : 58 (SM Unichem 91) |
| Flexibility at impact | : 40% (FTM 6226) |
| Adhesion | 70% (for squared pattern ASTM D-3002) |
| % Gel | = 98% |

The same mixture has been spread on a stiff paper substrate (thickness 0.4 mm) with the same procedure as above and was cross-linked as specified above to give a smooth and brilliant film having no tackiness and capable of giving a good flexibility up to 180°C. The adhesion on inked paper was equally satisfactory.

Another portion of the product aforementioned has been supplemented with its 2% by weight of benzoyl peroxide and cast in a mold consisting of two planar glass slabs separated by a plasticized-PVC gasked 2 mm thick. The mold has been placed in a forced circulation oven at 50°C for 24 hours so that a slab has been obtained, which is perfectly transparent, having a very high hardness and outstanding optical properties.

EXAMPLE 2

A 5000 ml flask having at its top a 20-plate (foraminous) (dia. 30 mm) and equipped similarly to that of Example 1 has been charged with 2122 g (20 mols) of diethyleneglycol, 1440 g (16 mol) of dimethylcarbonate, 14 g of a 30% solution of sodium methylate in methanol.

The synthesis was carried out similarly to what has been described in Example 1 and was completed within an overall time of 6 hours.

A distillate fraction was obtained (1086 g) containing methanol (67.7%) and dimethylcarbonate (32.3%).

The residue (2465 g) contained diethyleneglycol (18%) and an oligocarbonate of diethyleneglycol and exhibited the 12% of free -OH groups.

The product thus obtained has been subjected to acrylation working with a procedure akin to that reported in Example 1.

The reaction flask has been charged with 200 g of the product described hereinabove, 16 g of diethyleneglycol, 130 g of acrylic acid, 100 mg of hydroquinone methyl ether, and 400 mls of toluene.

The reaction mixture was heated as described in Example 1 and, upon the addition of 2 g of paratoluene-sulphonic acid, heating with reflux was continued for a period of 5 hours. By so doing, there were collected in the Marcusson header 29.8 mls of water (theory 30.5 mls). The gaschromatographic analysis of the reaction products relative to free diethyleneglycol, indicated the absolute absence of the free glycol, the presence of diethyleneglycol diacrylate and monoacrylate in the ratio of the former to the latter of 92% to 8% in terms of percentage area.

The reaction product has subsequently been treated with 15 g of $K_2CO_3$, with stirring at room temperature for 3 hours, filtered and treated under vacuum to evaporate off the solvent. There have been obtained in this way 235 g of product, with a yield of 91% : it had an acid number of 4 and a viscosity at 25°C of 80 cps.

The product has been subjected to the technological tests reported in Example 1 both in connection with the cross-linking with UV radiations and with cross-linking with peroxide groups and the results were close to those of Example 1.

EXAMPLE 3

The same apparatus as described in Example 2 was charged with 1698 g (16 mol) of diethyleneglycol, 1692 g (18.8 mols) of dimethylcarbonate and 14 g of a 30% solution of sodium methylate in methanol.

The reaction, carried out under conditions akin to those of Example 2, gave a distillate fraction (1276 g) consisting of methanol (64.2%) and dimethylcarbonate (35.8%) and a residue (2124 g) containing diethyleneglycol (4.8%) and an oligocarbonate of diethyleneglycol.

The number of free-OH was 5.4% and the product had a viscosity of 2600 centipoises (cps) at 25°C.

The product thus obtained has been supplemented with free diethyleneglycol and subjected to esterification with acrylic acid, the procedure being the same as in Example 1.

The reaction flask has been charged with 100 g of the product described hereinabove, 40 g of diethyleneglycol, 78 g of acrylic acid, 100 mg of phenthiazine and 200 mls of benzene. The reaction mixture was supplemented, after refluxing, with 2 mls of methanesulphonic acid and the reaction was allowed to proceed for 7 additional hours, so that there were collected in the Marcusson header 17.5 mls of water (theory 18 mls). The gaschromatographic analysis of the reaction products relative to free diethyleneglycol indicated an absolute absence of the free glycol and the presence of diethyleneglycol diacrylate and monoacrylate in the percentage areal ratio of 95% to 5%.

The product has subsequently been treated with

10 g of $Na_2CO_3$, filtered and stripped of its solvent by treatment under vacuum.

Thus, there have been obtained 180 g of end product (yield 93%) having an acid number of 3, a viscosity of 110 cps at 25°C and technological properties after cross-linking (UV and peroxide) akin to those reported in Example 1.

EXAMPLE 4

The product prepared with the condensation reaction of Example 2 has been used and has been subjected to an esterification reaction with metacrylic acid with the following procedure.

The reaction flask has been charged with 200 g of the oligocarbonate, 16 g of diethyleneglycol, 200 mg (milligrams) of phenthiazine, 155 g of metacrylic acid and 400 mls of benzene. After refluxing, the mixture has been supplemented with 4 g of paratoluenesulphonic acid and refluxing has been proceeded with during 20 additional hours so that there have been collected in the Marcusson header 27 mls of water (theory 30 mls).

The gaschromatographic analysis as reported in Example 1 of the reaction products relative to free diethyleneglycol indicated the absolute absence of the free glycol and the presence of the glycol dimetacrylate and monometacrylate in the areal percentage ratio of 88% to 12%.

The product has been subjected to a treatment with 15 g of $Na_2CO_3$, filtered and stripped of its solvent by treatment under vacuum.

There have been obtained in this way 228 g of end product (yield 67%) which had an acid number of 4 and a viscosity of 44 cps at 25°C. A portion of the product has been supplemented with its 4% by weight of benzyldimethylketal and spread on steel slabs as reported in Example 1. After a total number of 20 passes through the UV-ray generator, a thoroughly dry film has been obtained, having the following specifications:

Thickness                  = 50 microns

König Hardness             = 52

Flexibility at impact = 50%

Adhesion                   = 60%

Gel %                      = 95%

The application of the product to paper and the subsequent UV cross-linking gave a film having outstanding properties as to glossiness and pliability up to 180°C.

Cross-linking in a mold as reported in Example 1 produced a stiff transparent slab having a high hardness and extremely good optical properties.

EXAMPLE 5

The product described in Example 3 has been employed and has been subjected to esterification with metacrylic acid under conditions akin to those disclosed in Example 4.

The reaction flask has been charged with 100 g of oligocarbonate, 40 g of diethyleneglycol, 95 g of metacrylic acid, 100 mg of hydroquinone methyl ether and 200 mls of toluene.  The mixture was supplemented, after refluxing, with 2 mls of methane sulphonic acid and refluxing has been continued for 16 additional hours so that there have been collected in the Marcusson header 18.8 mls of water (theory 20 mls).  The gaschromatographic analysis of the reaction products relative to diethyleneglycol (free) indicated the absolute absence of the free glycol and the presence of the glycol dimetacrylate and the monometacrylate in the percentage areal ratio of 90% to 10%.

The product has been subjected to neutralization with 10 g of $K_2CO_3$ and treated as reported in Example 1. There have been obtained 165 g (yield 79%) of end product which had an acid number of 3 and a viscosity of 42 cps at 25°C.  The product has been subjected to the cross-linking reactions as described in Example 4 and has given very similar technological properties.

EXAMPLE 6

A two necked, 500 ml Claisen flask fitted with a thermometer and a magnetic bar stirrer was charged with 64.9 g (0.72 mol) of 1,4-butanediol, 123.6 g (0.60 mol) of bis-methyl-carbonate of 1,4-butanediol and 101 mg (milligrams) of a 30% solution of sodium methylate in methanol.  The flask was evacuated until the absolute pressure was as low as 5 mmHg and slowly heated to 80°C during a period of one hour.  The system was then held at 80°C for 1 hour.

During the entire reaction run for the mixture, the vapors evolved therefrom have been condensed in a trap cooled down to -80°C (minus). The condensate (37 g) was composed of methanol (72.9%) and dimethylcarbonate (27.1%).

The residue (150 g) consisted for its 2.5% of 1,4-butanediol and the balance was an oligocarbonate of 1,4-butanediol.

The product thus obtained had the 6.8% of -OH groups: it has been subjected to esterification with acrylic acid according to a procedure similar to that reported in Example 1.

The reaction flask has been charged with 32 g of the product in question, 16 g of acrylic acid, 50 mg (milligrams) of hydroquinone and 150 mls of benzene. After refluxing, there has been added 1.5 g of p.toluenesulphonic acid and the refluxing reaction has been continued during 6 additional hours so that there have been collected in the Marcusson header 3.5 mls of water (theory 3.6 mls). The reaction mixture, after neutralization with 10 g of $Na_2CO_3$ and evaporation of the solvent gave 45 g of end product, a semifluid compound having an acid number of 2.5. The product has been subjected to cross-linking with UV-rays as reported in Example 1 and has given a gel contents of 96%.

EXAMPLE 7

The same apparatus as described in Example 6 has been charged with 70.9 g (0.60 mol) of 1,6-hexanediol, 117.1 g (0.5 mol) of the bis-methylcarbonate of 1,6-hexanediol and 110 mg of a 30% solution of sodium methylate in methanol. The procedure was then the same as described in Example 6.

There have been obtained 33 g of a volatile condensed fraction composed of methanol (the 75%) and dimethylcarbonate (the 25%).

The residue (155 g) contained, for its 2.9% 1,6-hexanediol whereas the balance was an oligocarbonate of 1,6-hexanediol, with the 4.7% of -OH groups.

The product has been subjected to acrylation working under the same conditions as reported in Example 1.

The reaction flask has been charged with 72 g of the oligocarbonate, 16 g of acrylic acid, 70 mg (milligrams) of phenthiazine and 200 mls of benzene. After refluxing there have been added 2.5 g of Amberlyst-15 resin (consisting of polystyrenesulphonic acid) and refluxing has been continued during 12 additional hours so that there have been collected in the Marcusson header 3.4 mls (theory 3.6 mls) of water. The reaction mixture, upon filtration of the resin on a $G_1$ diaphragm, neutralization with 10 g of $Na_2CO_3$ and evaporation of the solvent gave 72 g (yield 87%) of a solid end product having a melting point of 45°C and an acid number of 0.5. The product of the UV-cross-linking has given a gel contents as high as 97%.

EXAMPLE 8

The apparatus described in Example 6 has been charged with 72.1 g of triethyleneglycol (0.48 mol), 106.4 g (0.40 mol) of bismethylcarbonate of the triethyleneglycol and 112 mg (milligrams) of a 30% solution of sodium methylate in methanol.

With a procedure quite similar to that of Example 6 there have been obtained 26.5 g of a condensed volatile fraction containing methanol (66%) and dimethylcarbonate (34%).

The bottom product (151 g) contained for the 7.1% triethyleneglycol, whereas the balance consisted of an oligocarbonate of triethyleneglycol, containing 4.7% of -OH.

The product has been subjected to acrylation according to the procedure of Example 1. The reaction flask has been charged with 65 g of the oligocarbonate, 13 g of acrylic acid, 80 mg (milligrams) of phenthiazine and 200 mls of benzene. Upon refluxing, there has been added 1.5 g of paratoluenesulphonic acid and refluxing has been continued during 7 additional hours, so that there have been collected 3.5 mls of water (theory 3.6 mls). The reaction mixture, after having evaporated off the solvent, gave 69 g of the end product, having an acid number of 3 and a viscosity of 360 cps (centipoises) at 25°C.

The product, cross-linked with UV-radiations as disclosed in Example 1 has given a gel contents as high as 98%.

EXAMPLE 9

The apparatus of Example 6 has been charged with 62.5 g (0.60 mol) of neopentyleneglycol, 111 g (0.50 mol) of· the bismethylcarbonate of diethyleneglycol and 97 mg of a 30% solution of sodium methylate in methanol

By adopting the same procedure as in the previous examples, there have been obtained 35 g of a condensed volatile fraction consisting of methanol (62.2%) and dimethylcarbonate (37.8%) and 138 g of residual products. The latter consisted for the 1.1% of neopentyleneglycol, for the 3% of diethyleneglycol and the balance was an oligocarbonate of neopentyleneglycol and diethyleneglycol. The contents of -OH(hydroxyls, free) was 6.4%.

The product has been acrylated by introducing in the reaction flask 53 g of the oligocarbonate (0.2 equivalents of the hydroxyl groups), 16 g of acrylic acid, 100 mg (milligrams) of hydroquinone and 200 mls of benzene. After a supplemental addition of 1.5 g of paratoluene-sulphonic acid, refluxing has been continued during 10 additional hours, so that there have been collected 3.2 mls of water (theory 3.6 mls). The reaction mixture, upon neutralization with 10 g of $K_2CO_3$ and evaporation of the solvent gave 63.2 g of an end product having an acid number of 5, which, when subjected to UV-ray cross-linking as reported in Example 1, gave a gel contents as high as 94%.

EXAMPLE 10

An apparatus akin to that of Example 6 but having a capacity of 1000 mls was charged with 207 g (2.3 mol) of 1,4-butanediol, 444 g (2 mol) of the bismethylcarbonate of diethyleneglycol and 323 mg (milligrams) of a 30% solution of sodium methylate in methanol.

By adopting a procedure in the line of the previous examples, there were collected 133 g of a condensed volatile fraction consisting of methanol (59.7%) and dimethylcarbonate (40.3%).

The product (518 g) composed of 1,4-butanediol (0.2%), diethyleneglycol (2.4%) and oligocarbonate of 1,4-butanediol and diethyleneglycol, contained the 7% of free hydroxyls(-OH).

The product obtained in this way could be used as such, or, as an alternative, on the basis of the characteristics one desired to impress thereon, after removal of a portion of the diethyleneglycol by a reduced pressure distillation.

Thus, 325 g of the product were subjected to distillation under reduced pressures (0.5 mmHg and 120°C as the bottom temperature). There were obtained 90 g of a distillate which mainly consisted of diethyleneglycol. The residue, amounting to 232 g, contained but the 5% of free glycol with the 7.3% of hydroxyls(-OH).

The product thus obtained has been subjected to acrylation working under the conditions described in Example 1. The reaction flask has been charged with 49 g of oligocarbonate (0.2 equivalents of OH groups), 16 g of acrylic acid, 100 mg (milligrams) of phenthiazine and 200 mls of benzene. The esterification has been carried out in the presence of 1.4 g of benzenesulphonic acid and refluxing has been continued during 10 additional hours so that there have been collected 3.6 mls of water, corresponding to the theoretically calculated amount. The reaction mixture, upon neutralization with 10 g of $K_2CO_3$ and evaporation of the solvent gave 59 g of a final product having an acid number of 2 and a viscosity of 520 cps (centipoises at 25°C).

The product, when subjected to UV-cross-linking as reported in Example 1, gave a continuous and homogeneous film having a gel contents as high as 97%.

CLAIMS :

1. A composition based on aliphatic polycarbonates with acrylic or metacrylic end groups, cross-linkable in the presence of radicalic initiators and obtained by functionalization with acrylic or metacrylic groups of a mixture composed of diols, polyols and their OH-terminated oligomeric derivatives containing in their molecules carbonate groups.

2. Composition according to Claim 1, characterized in that the diols and polyols have a number of carbon atoms comprised between 3 and 20 and can contain in their molecules ethereal bridges or aromatic or cycloaliphatic groupings and a number of hydroxyl functions comprised between 2 and 4.

3. Composition according to the preceding Claims, characterized in that the diol or the polyol is preferably 1,4-butanediol, neopentyleneglycol, diethyleneglycol, 1,6-hexanediol, triethyleneglycol, 1,3-dimethanol-cyclohexane, 1,4-dimethanol-cyclohexane, 1,3-dimethanol-benzene, 1,4-dimethanolbenzene, $\alpha,\omega$-bis-hydroxyethyl bisphenol A, dimethanoltricyclodecane, trimethylolpropane, pentaerythritol, 1,4-butanediol-2, bis-hydroxyethyl-hydroquinone.

4. A process for the preparation of compositions as claimed in the preceding Claims consisting in reacting the mixture of diols, polyols and their OH-terminated oligomeric derivatives containing carbonate groups in their molecules, with acrylic or metacrylic acid.

5. Process for the preparation of compositions as claimed in Claim 1 to 3, consisting in reacting the mixture of diols, polyols and their OH-terminated oligomeric derivatives containing carbonate groups in their molecules, with acrylic or metacrylic acid esters.

6 Process according to Claims 4 and 5 characterized in that it takes place in the presence of an acidic catalyst.

7. Process according to the preceding Claim, characterized in that the acidic catalyst is preferably p.toluenesulphonic acid, methanesulphonic acid, trifluoromethanesulphonic acid, anhydrous sulphuric acid, benzenesulphonic acid and the polystyrenesulphonic resins.

8. Process according to Claims 4 and 5 characterized in that the reaction is carried out within a solvent selected from among the aliphatic, cycloaliphatic, aromatic and halogen-substituted hydrocarbons and mixtures thereof.

9. Process for the production of compositions as claimed in Claims 1 to 3 consisting in reacting the mixture of diols, polyols and their OH-terminated oligomeric derivatives containing carbonate groups in their molecules, with the acid chlorides of acrylic and metacrylic acid.

10. Process according to the preceding Claim, characterized in that the reaction is carried out within a solvent selected from among the aliphatic, aromatic and halogen-substituted hydrocarbons and mixtures thereof.

11. Process according to Claim 9, characterized in that it takes place in the presence of a tertiary amine in a stoichiometric amount relative to the acid chloride.

12. Process according to the preceding Claim characterized in that it takes place at a temperature comprised between 0°C and +50°C.

0092269

CASE 1486

CLAIMS FOR AUSTRIA :

1.    A process for preparing compositions based on aliphatic polycarbonates with acrylic or metacrylic end groups, cross-linkable in the presence of radicalic initiators and obtained by functionalization with acrylic or metacrylic groups of a mixture composed of diols, polyols and their -OH-terminated oligomeric derivatives containing in their molecules carbonate groups, comprising the step of reacting the mixture of diols, polyols and their -OH-terminated oligomeric derivatives containing carbonate groups, in their molecule, with acrylic or metacrylic acid.

2.    A process according to Claim 1, characterized in that the diols and polyols have a number of carbon atoms comprised between 3 and 20 and can contain in their molecules ethereal bridges or aromatic or cycloaliphatic groupings and a number of hydroxyl functions comprised between 2 and 4.

3.    A process according to Claim 1, characterized in that the diol or the polyol is 1,4-butanediol, neopentylglycol, diethyleneglycol, 1,6-hexanediol, triethyleneglycol, 1,3-dimethanolcyclohexane, 1,4-dimethanol-cyclohexane, 1,3-dimethanolbenzene, 1,4-dimethanolbenzene, $\alpha, \omega$ , bis-hydroxyethyl bisphenol A, dimethanoltricyclodecane, trimethylolpropane, pentaerythritol, 1,4-butanediol-2, bis-hydroxyethyl-hydroquinone.

4.    A process according to the preceding Claims, consisting in reacting the mixture of diols, polyols and their OH-terminated oligomeric derivatives containing carbonate groups in their molecules, with acrylic or metacrylic acid.

5.    Process according to Claims 1 to 3, consisting in reacting the mixture of diols, polyols and their OH-terminated oligomeric derivatives containing carbonate groups in their molecules, with acrylic or metacrylic acid esters.

6.    Process according to Claims 4 and 5 characterized in that it takes place in the presence of an acidic catalyst.

7.    Process according to the preceding Claim, characterized in that the acidic catalyst is preferably p.toluenesulphonic acid, methanesulphonic acid, trifluoromethanesulphonic acid, anhydrous sulphuric acid, benzenesulphonic acid and the polystyrenesulphonic resins.

8.    Process according to Claims 4 and 5 characterized in that the reaction is carried out within a solvent selected from among the aliphatic, cycloaliphatic, aromatic and halogen-substituted hydrocarbons and mixtures thereof.

9.    Process for the production of compositions as claimed in Claims 1 to 3 consisting in reacting the mixture of diols, polyols and their OH-terminated oligomeric derivatives containing carbonate groups in their molecules, with the acid chlorides of acrylic and metacrylic acid.

10. Process according to the preceding Claim, characterized in that the reaction is carried out within a solvent selected from among the aliphatic, aromatic and halogen-substituted hydrocarbons and mixtures thereof.

11. Process according to Claim 9, characterized in that it takes place in the presence of a tertiary amine in a stoichiometric amount relative to the acid chloride.

12. Process according to the preceding Claim characterized in that it takes place at a temperature comprised between 0°C and +50°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 757 086 (STE NATIONALE DES POUDRES ET EXPLOSIFS) * Claims 1-6; examples 1-12; tables 1, 2 * | 1-4,6-8 | C 08 G 63/62<br>C 08 G 63/20<br>C 08 F 283/02 |
| A | DE-A-2 607 959 (HENKEL UND CIE GMBH) * Claims 1, 2; example 1; page 3, line 18 - page 4, line 3 * | 1-3,5,6 | |
| A | DE-B-1 595 703 (BAYER AG) * Claim; example 7 * | 1,4,5,8,12 | |
| A | DE-A-3 106 570 (TOAGOSEI CHEMICAL INDUSTRY CO. LTD.) * Claims 1, 4 * | | |
| P,A | EP-A-0 054 105 (VIANOVA KUNSTHARZ AG) * Claim 1; examples * | | **TECHNICAL FIELDS SEARCHED (Int. Cl. ³)**<br><br>C 08 F 283/02<br>C 08 G 63/00 |

The present search report has been drawn up for all claims

| Place of search | Date of completion of the search | Examiner |
|---|---|---|
| BERLIN | 15-07-1983 | HASS C V F |